# EUROPÄISCHE PATENTSCHRIFT

(11) **EP 1 263 665 B1**
(45) Veröffentlichungstag und Bekanntmachung des Hinweises auf die Patenterteilung: **17.11.2004**
(21) Anmeldenummer: 01913857.7
(22) Anmeldetag: 10.03.2001
(51) Int. Cl.: B65G 1/14

(54) **GESTELL ZUM LAGERN VON FLÄCHIGEN WERKSTÜCKEN**
STAND FOR THE MOUNTING OF FLAT WORKPIECES
CHASSIS POUR STOCKER DES PIECES PLATES

(30) Priorität: 15.03.2000 DE 20004711 U
(43) Veröffentlichungstag der Anmeldung: 11.12.2002
(73) Patentinhaber: MTS Maschinenbau GmbH, 88512 Mengen (DE)
(72) Erfinder: STROBEL, Gustav, 88348 Saulgau (DE)
(74) Vertreter: Weiss, Peter, Dr. rer. nat.
(86) Internationale Anmeldenummer: PCT/EP2001/002688
(87) Internationale Veröffentlichungsnummer: WO 2001/068487

(56) Entgegenhaltungen:
- EP-A- 0 510 405
- EP-A- 0 878 417
- DE-A- 3 619 688
- DE-C- 19 831 181

## Beschreibung

Die Erfindung betrifft ein Gestell zum Lagern von flächigen Werkstücken mit zumindest einer Seitenwange, an der Klinken angeordnet sind, welche der Halterung der Werkstücke dienen, wobei die Klinken aus einer Ruhelage in eine Arbeitsposition bringbar sind, in der sie das Werkstück halten, und der letzten Klinke eine Verriegelungseinrichtung zugeordnet ist.

Ein derartiges Gestell ist beispielsweise aus der DE 197 29 442 A1 oder der DE 197 29 444 A1 bekannt. Dabei handelt es sich um horizontal angeordnete Stapelsäulen, die selbstverständlich auch vertikal aufgestellt genutzt werden können.

Eine erste Klinke befindet sich in Bereitschaftsstellung. Wird das zu lagernde Werkstück in das Gestell eingebracht, so schwenkt die Klinke in Arbeitsposition, während sie eine nachfolgende Klinke aus einer Ruhelage in eine Bereitschaftsposition mitnimmt. Das nächste einzubringende Werkstück bringt die nachfolgende Klinke aus der Bereitschaftsposition in die Arbeitsposition, in der die Klinke zusammen mit der vorangegangenen Klinke das Werkstück zwischen sich aufnimmt.

Sobald das gesamte Gestell gefüllt ist, wird ein Schieber in Bewegung versetzt, welcher die Klinken in der Arbeitsposition festhält. Dieser Schieber wird manuell bedient und ist recht aufwendig.

Ein Gestell der o. g. Art ist ferner aus der EP 0 510 405 A1 und der DE 36 19 688 A1 bekannt. In beiden Fällen ist eine Verriegelungseinrichtung vorgesehen, mittels der die letzte Klinke, die beladen wird, festgelegt wird.

Der vorliegenden Erfindung liegt die Aufgabe zugrunde, ein Gestell der o. g. Art zu entwickeln, bei dem die Verriegelungseinrichtung wesentlich einfacher aufgebaut und von einem Roboter betätigbar ist.

Zur Lösung dieser Aufgabe führt, dass ein Schubelement einer Klinkenfreifläche der letzten Klinke zugeordnet und entlang einer Seitenwange gegen die Klinkenfreifläche führbar ist, wobei das Schubelement mit einem Schieber an der Seitenwange in Verbindung steht und dem Schieber ein Führungsblock aufgesetzt ist.

Durch die Verriegelung der letzten Klinke ist es für die vorangegangenen Klinken nicht mehr möglich, aus ihrer Arbeitsposition zu gelangen.

Die Betätigung der Verriegelungseinrichtung erfolgt durch einen Roboter. Bevorzugt handelt es sich dabei um den Roboter, der auch die Werkstücke in das Gestell einbringt.

Damit der Roboter eine Angriffsfläche findet, besitzt die Verriegelungseinrichtung einen Führungsblock, der einem Schieber aufgesetzt ist. Dieser Schieber wird in Langlöchern an der Seitenwange geführt, wobei er in einem bevorzugten Ausführungsbeispiel mit einem Schubelement in Verbindung steht, das an einer Klinkenfreifläche der letzten Klinke anschlägt. Bevorzugt ist dieses Schubelement als Rolle ausgebildet, so dass beim Schwenken der Klinke kein Reibungswiderstand zwischen Schubelement und Klinke entsteht.

An dem Schieber befindet sich eine Nase, die mit einem einfachen Riegel zusammenwirken kann. Auch dieser Riegel ist so ausgestaltet, dass er einfach von einem Roboter betätigt werden kann. Beispielsweise genügt hier ein abgekröpfter Griffstreifen, der von einem Roboterarm angefahren werden kann.

Der Riegel selbst befindet sich an einer Halterung und ist federgelagert, so dass eine Entriegelung durch den Roboter gegen die Kraft dieser Feder erfolgen muss.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine perspektivische Ansicht eines Teils eines Gestells zum Lagern von flächigen Werkstücken in entriegelter Lage;
Figur 2 eine perspektivische Ansicht des Teils des Gestells gemäss Figur 1 in Riegellage.

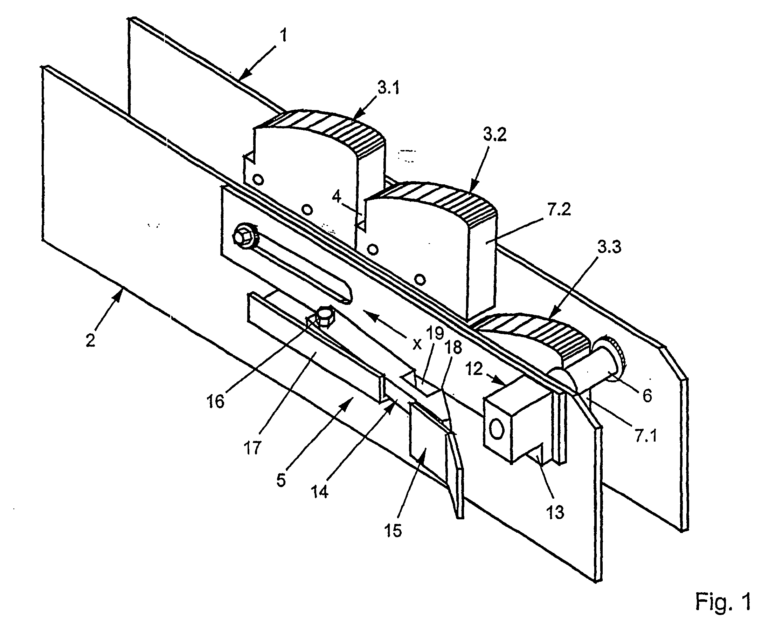

Gemäss Figur 1 sind beabstandet zueinander als Teile eines erfindungsgemässen Gestells zum Lagern von flächigen Werkstücken zwei Seitenwangen 1 und 2 angeordnet. Zwischen den beiden Seitenwangen 1 und 2 lagern Klinken 3.1 bis 3.3, wobei in einem Einschnitt 4 zwischen zwei Klinken 3.1 und 3.2 das flächige Werkstück aufgenommen und gehalten wird. Die beiden Klinken 3.1 und 3.2 befinden sich in Arbeitsposition, während sich die Klinke 3.3 in Ruhelage befindet. In Ruhelage ist die Klinke 3.3 bevorzugt zwischen den beiden Seitenwangen 1 und 2 versenkt angeordnet. Wie die Klinke 3.1 bis 3.3 von der Ruhelage in die Arbeitslage gelangt, soll von untergeordneter Bedeutung sein. Hier gibt es eine Vielzahl von Möglichkeiten, die vom vorliegenden Erfindungsgedanken umfasst sein sollen. Nur beispielhaft wird auf die DE-OS 40 20 864, DE 41 33 464, DE 38 11 310 verwiesen.

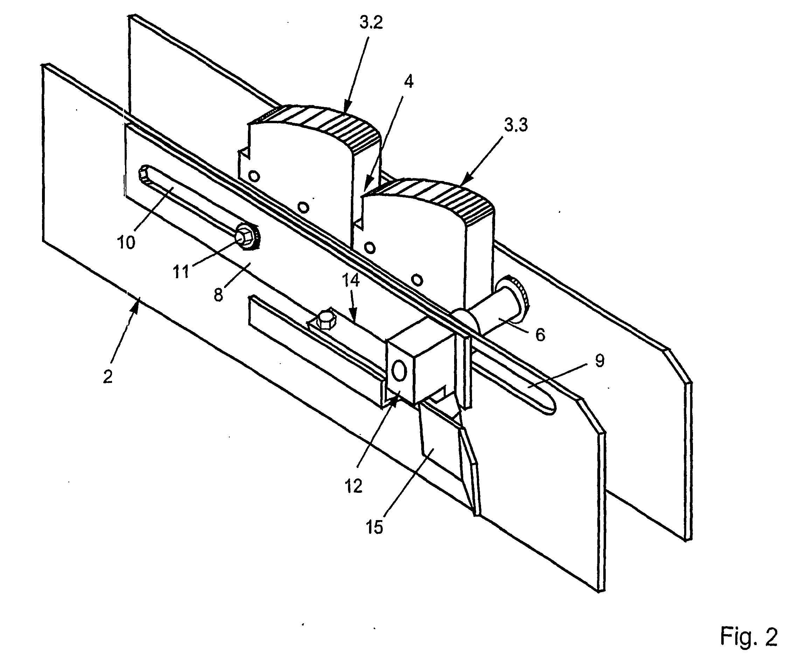

Der letzten Klinke 3.1 ist eine Verriegelungseinrichtung 5 zugeordnet. Diese Verriegelungseinrichtung 5 greift mit einer Rolle 6 eine Klinkenfreifläche 7 an. Die Rolle 6 ist durch die Seitenwange 2 hindurch mit einem leistenförmigen Schieber 8 verbunden, der entlang der Seitenwange 2 verschoben werden kann. In Figur 2 ist erkennbar, dass der Schieber in einem Langloch 9 in der Seitenwange 2 geführt ist. In dem Langloch 9 gleitet eine nicht näher gezeigte Verbindung zwischen Rolle 6 und Schieber 8.

Andernends weist der Schieber 8 selbst ein Langloch 10 auf, welches von einer Schraube 11 durchsetzt ist, die in die Seitenwange 2 eingeschraubt ist.

Nahe dem Ende des Schiebers 8 beim Langloch 9 ist dem Schieber 8 noch ein Führungsblock 12 aufgesetzt, welcher L-förmig ausgestaltet ist und eine Nase 13 ausbildet. Diese Nase 13 wirkt mit einem Riegel 14 zusammen, wobei dem Riegel 14 ein Griffstreifen 15 aufgesetzt ist. Der Griffstreifen 15 ist abgekröpft ausgebildet.

Andernends des Griffstreifens 15 dreht der Riegel 14 um einen Drehpunkt 16. Die Drehung erfolgt bevorzugt gegen die Kraft einer nicht näher dargestellten Feder und einer Halterung 17. Im gezeigten Ausführungsbeispiel 17 ist die Halterung 17 ein entsprechender Montagewinkel.

### Die Funktionsweise der vorliegenden Erfindung ist folgende:

In das Gestell 1 werden von einem nicht näher gezeigten Roboter od. dgl. flächige Werkstücke eingebracht. Dabei schlägt das flächige Werkstück an der Klinkenfreifläche 7 einer sich in Bereitsschaftsstellung befindlichen Klinke an und bringt diese Klinke von der Bereitschaftsposition in die Arbeitsposition, in der die Klinke gegen ein vorher in das Gestell eingebrachtes Werkstück drückt. Das Werkstück wird dabei in dem Einschnitt 4 aufgenommen.

Sobald das letzte Werkstück an der Freifläche 7.2 der zweitletzten Klinke 3.2 anschlägt, wird ebenfalls mittels des Roboters der Schieber 8 in Schubrichtung x bewegt. Er gleitet dabei geführt in den Langlöchern 9 und 10. Die Rolle 6 drückt auf die letzte Klinke 3.3 bzw. deren Klinkenfreifläche 7.1, so dass diese Klinke 3.3 gegen die Freifläche 7.2 der vorangegangenen Klinke 3.2 bewegt wird und das Werkstück zwischen der Klinke 3.2 und 3.3 eingeklemmt wird.

Zusammen mit dem Schieber 8 wird auch der Führungsblock 12, an dem beispielsweise der Roboter angreifen kann, in Richtung x bewegt. Die Nase 13 überfährt dabei eine Steuerkante 18 des Riegels 14, so dass die Steuerkante 18 die Nase 13 hintergreifen kann, wie dies in Figur 2 dargestellt ist. Die Nase 13 fährt in eine Riegelausnehmung 19 ein, wobei dies durch eine Federbelastung des Riegels 14 erleichtert wird.

Zum Entriegeln greift der Roboter den Griffsteifen 15 an und schwenkt den Riegel 14 aus seiner Riegelposition. Der Schieber 8 bewegt sich nun entweder selbsttätig unter dem Druck der Klinke 3.3 oder unter Einwirkung des Roboters entgegen der Schubrichtung x, so dass die Klinke 3.3 frei wird. Eine Bewegung kann auch noch dadurch erleichtert werden, dass zumindest das Langloch 9 geneigt nach unten verlaufend ausgebildet ist, so dass der Schieber 8 geführt in diesem Langloch 9 nach unten fällt.

Die weiteren Werkstücke können dann ohne Schwierigkeiten entnommen werden, wobei beim Entnehmen die Klinke nach dem Werkstück verschwenkt wird und wieder zwischen die Seitenwangen 1 und 2 eintaucht.

| **Positionszahlenliste** | | | | | |
|---|---|---|---|---|---|
| 1 | Seitenwange | 34 | | 67 | |
| 2 | Seitenwange | 35 | | 68 | |
| 3 | Klinken | 36 | | 69 | |
| 4 | Einschnitt | 37 | | 70 | |
| 5 | Verriegelungseinr. | 38 | | 71 | |
| 6 | Rolle | 39 | | 72 | |
| 7 | Klinkenfreifläche | 40 | | 73 | |
| 8 | Schieber | 41 | | 74 | |
| 9 | Langloch | 42 | | 75 | |
| 10 | Langloch | 43 | | 76 | |
| 11 | Schraube | 44 | | 77 | |
| 12 | Führungsblock | 45 | | 78 | |
| 13 | Nase | 46 | | 79 | |
| 14 | Riegel | 47 | | | |
| 15 | Griffstreifen | 48 | | | |
| 16 | Drehpunkt | 49 | | | |
| 17 | Halterung | 50 | | | |
| 18 | Steuerkante | 51 | | | |
| 19 | Riegelausnehmung | 52 | | | |
| 20 | | 53 | | | |
| 21 | | 54 | | | |
| 22 | | 55 | | | |
| 23 | | 56 | | x | Schubrichtung |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Gestell zum Lagern von flächigen Werkstücken mit zumindest einer Seitenwange (1, 2), an der Klinken (3.1, 3.2, 3.3) angeordnet sind, welche der Halterung der Werkstücke dienen, wobei die Klinken aus einer Ruhelage in eine Arbeitsposition bringbar sind, in der sie das Werkstück halten, und der letzten Klinke (3.3) eine Verriegelungseinrichtung (5) zugeordnet ist,
**dadurch gekennzeichnet,**
**dass** ein Schubelement (6) einer Klinkenfreifläche (7.1) der letzten Klinke (3.3) zugeordnet und entlang einer Seitenwange (2) gegen die Klinkenfreifläche (7.1) führbar ist, wobei das Schubelement (6) mit einem Schieber (8) an der Seitenwange (2) in Verbindung steht und dem Schieber (8) ein Führungsblock (12) aufgesetzt ist.

2. Gestell nach Anspruch 1, **dadurch gekennzeichnet, dass** das Schubelement eine Rolle (6) ist.

3. Gestell nach Anspruch 1 oder 2, **dadurch gekennzeichnet, dass** der Schieber (8) in zumindest einem Langloch (9) in der Seitenwange (2) geführt ist.

4. Gestell nach Anspruch 3, **dadurch gekennzeichnet, dass** das Langloch (9) geneigt angeordnet ist.

5. Gestell nach wenigstens einem der Ansprüche 1 bis 4, **dadurch gekennzeichnet, dass** der Führungsblock (12) eine Rastnase (13) ausbildet.

6. Gestell nach Anspruch 5, **dadurch gekennzeichnet, dass** der Rastnase (13) ein Riegel (14) zugeordnet ist.

7. Gestell nach Anspruch 6, **dadurch gekennzeichnet, dass** der Riegel (14) drehbar und ggf. federabgestützt an einer Halterung (17) lagert.

8. Gestell nach Anspruch 6 oder 7, **dadurch gekennzeichnet, dass** dem Riegel (14) ein abgekröpfter Griffstreifen (15) angeformt ist.

## Claims

1. Stand for storing flat workpieces, having at least one side support (1, 2), on which latches (3.1, 3.2, 3.3) are disposed, which serve to support the workpieces, the latches being able to be brought from an inoperative position into an operative position, in which they retain the workpiece, and a locking means (5) being associated with the last latch (3.3), **characterised in that** a pushing element (6) is associated with a latch-free surface (7.1) of the last latch and is guidable along a side support (2) towards the latch-free surface (7.1), the pushing element (6) communicating with a slide means (8) on the side support (2), and a guide block (12) being mounted on the slide means (8).

2. Stand according to claim 1, **characterised in that** the pushing element is a roller (6).

3. Stand according to claim 1 or 2, **characterised in that** the slide means (8) is guided in at least one elongate slot (9) in the side support

4. Stand according to claim 3, **characterised in that** the elongate slot (9) is disposed in an inclined manner.

5. Stand according to at least one of claims 1 to 4, **characterised in that** the guide block (12) forms a locking projection (13).

6. Stand according to claim 5, **characterised in that** a bar (14) is associated with the locking projection (13).

7. Stand according to claim 6, **characterised in that** the bar (14) is mounted rotatably and possibly in a resiliently supported manner on a mounting support (17).

8. Stand according to claim 6 to 7, **characterised in that** a bent gripping strip (15) is provided on the bar (14).

## Revendications

1. Châssis pour stocker des pièces plates avec au moins une joue latérale (1, 2) sur laquelle sont disposées des poignées (3.1, 3.2, 3.3) servant à supporter les pièces, les poignées pouvoir être amenées d'une position de repos en une position de travail dans laquelle elles maintiennent la pièce, et à la dernière poignée (3.3) étant associé un dispositif de verrouillage (5),
**caractérisé par le fait**
**qu'**un élément de poussée (6) est associé à une face libre de poignée (7.1) de la dernière poignée (3.3) et peut être guidé le long d'une joue latérale (2) contre la face libre de poignée (7.1), l'élément de poussée (6) communiquant avec un curseur (8) sur la joue latérale (2) et que sur le curseur (8) est placé un bloc de guidage (12).

2. Châssis selon la revendication 1, **caractérisé par le fait que** l'élément de poussée est un rouleau (6).

3. Châssis selon la revendication 1 ou 2, **caractérisé par le fait que** le curseur (8) est guidé dans au moins un trou oblong (9) dans la joue latérale (2).

4. Châssis selon la revendication 3, **caractérisé par le fait que** le trou oblong (9) est disposé incliné.

5. Châssis selon au moins l'une des revendications 1 à 4, **caractérisé par le fait que** le bloc de guidage (12) constitue un doigt d'encliquetage (13).

6. Châssis selon la revendication 5, **caractérisé par le fait qu'**au doigt d'encliquetage (13) est associé un verrou (14).

7. Châssis selon la revendication 6, **caractérisé par le fait que** le verrou (14) est monté de manière rotative et, éventuellement, en appui élastique sur un support (17).

8. Châssis selon la revendication 6 ou 7, **caractérisé par le fait que** sur le verrou (14) est formée une bande de saisie coudée (15).
